# EUROPÄISCHE PATENTSCHRIFT

(11) **EP 2 159 356 B1**
(45) Veröffentlichungstag und Bekanntmachung des Hinweises auf die Patenterteilung: **03.07.2013**
(21) Anmeldenummer: 09168073.6
(22) Anmeldetag: 18.08.2009
(51) Int. Cl.: E05C 1/00, F16B 37/04

(54) **Nutensteinanordnung**
Sliding block assembly
Agencement de coulisseau

(30) Priorität: 29.08.2008 DE 102008045071
(43) Veröffentlichungstag der Anmeldung: 03.03.2010
(73) Patentinhaber: ROTO FRANK AG, 70771 Leinfelden-Echterdingen (DE)
(72) Erfinder: Hanel, Dirk, 71144, Steinenbronn (DE); Siegler, Martin, 73230, Kirchheim/Teck (DE); Mothes, Klaus, 71034, Böblingen (DE)
(74) Vertreter: Kohler Schmid Möbus

(56) Entgegenhaltungen:
- EP-A1- 0 837 256
- WO-A1-2007/008060
- DE-U1- 20 113 607
- US-A1- 2006 257 225

## Beschreibung

Die Erfindung betrifft eine Nutensteinanordnung mit einem zu befestigenden Bauteil und mit einem Nutenstein zur Befestigung des Bauteils an einer hinterschnittenen Nut eines Fensters, einer Tür oder dgl.

Zur Befestigung von Bauteilen, insbesondere Beschlagteilen, an Profilen mit hinterschnittenen Nuten, wie beispielsweise einem Rahmen eines Fensters oder einer Tür, ist es bekannt, Nutensteine zu verwenden, die in die Nut eingeführt werden und anschließend verdreht werden, so dass sie die Hinterschneidungen der hinterschnittenen Nut hintergreifen.

Aus der DE 201 13 607 U1 ist ein Drehkipp-Beschlag bekannt, der über einen Nutenstein an einem Profil fixiert wird. Der Nutenstein weist zwei gegenüberliegende gekrümmte Enden auf. Die Krümmung ist so gestaltet, dass der Nutenstein bei unterschiedlich breiten Profilen zum Einsatz kommen kann. Der Nutenstein ist symmetrisch ausgebildet. In einer Dimension ist er so ausgebildet, dass er in die Nutöffnung eingeführt werden kann. Die Montage gestaltet sich als schwierig, wenn der Nutenstein vor oder während der Montage eine beliebige Stellung einnehmen kann.

Aus der EP 0 837 256 A1 ist eine Nutensteinanordnung bekannt, wobei ein Nutenstein auf eine Montagehilfe aufgelegt werden kann. Die Montagehilfe weist Stege auf, die eine Verdrehung des Nutensteins relativ zur Montagehilfe im Gegenuhrzeigersinn verhindert.

Die US 2006/0257225 A1 offenbart ebenfalls eine Nutensteinanordnung. Ein Nutenstein ist unterhalb einer Basisplatte angeordnet.

In der WO 2007/008060 A1 ist offenbart, dass eine Befestigungsschraube in einen Nutenstein eingeschraubt werden kann, um ein Bauteil zu fixieren.

Aufgabe der vorliegenden Erfindung ist es deshalb, eine Nutensteinanordnung bereitzustellen, die eine einfachere Montage ermöglicht.

Gelöst wird diese Aufgabe durch eine Nutensteinanordnung mit den Merkmalen des Anspruchs 1. Durch die Montagehilfe wird sichergestellt, dass sich der Nutenstein vor der Montage nicht in seine Betriebsstellung verdreht und somit stets eine Montage des Bauteils möglich ist. Vorzugsweise ist auch die Montagehilfe drehfest an dem zu befestigenden Bauteil angeordnet. Hierzu kann ein Vorsprung an der Montagehilfe dienen, der in eine Ausnehmung des zu befestigenden Bauteils eingreift. Dieser Vorsprung kann gleichzeitig als Stellungsanzeige und/oder Stellungsfixierung für den Nutenstein in einer Betriebsstellung dienen.

Gemäß einer bevorzugten Ausführungsform kann vorgesehen sein, dass die Montagehilfe zumindest teilweise elastisch ausgebildet ist und den Nutenstein von dem zu befestigenden Bauteil beabstandet hält. Dadurch wird sichergestellt, dass der Nutenstein beim Überführen in die Betriebsstellung nicht gegen die Hinterschneidungen der Nut gedreht wird sondern unter die Hinterscheidungen greift. Die Montagehilfe ist bevorzugt aus Kunststoff oder Federstahlblech ausgebildet.

Die drehfeste Halterung des Nutensteins in einer Montagestellung kann besonders einfach dadurch realisiert werden, dass die Montagehilfe Rippen aufweist, die in einer Montagestellung abschnittsweise seitlich, insbesondere stirnseitig, an dem Nutenstein anliegen. Der Nutenstein wird daher von der Montagehilfe seitlich umgriffen und dabei auch gleichzeitig ausgerichtet. Dadurch wird verhindert, dass sich der Nutenstein unabsichtlich verdrehen lässt. Eine oder mehrere der Rippen kann eine Nase aufweisen, die in eine Ausnehmung des Nutensteins greift, um den Nutenstein noch sicherer drehfest festzulegen.

Eine Stellungsanzeige erlaubt es einem Monteur zu erkennen, ob der Nutenstein in der Montagestellung ist oder nicht. Eine Stellungsfixierung verhindert, dass der Nutenstein versehentlich in seine Montagestellung zurück bewegt wird. Es ist vorteilhaft, wenn die Stellungsanzeige und/oder Stellungsfixierung an der Montagehilfe angeordnet ist. Dabei kann an dem Bauteil ein Sichtfenster vorgesehen sein, in das ein Teil der Stellungsanzeige bei einer Montagestellung des Nutensteins ragt. Insbesondere kann ein Vorsprung der Montagehilfe in das Sichtfenster ragen. Durch den Vorsprung wird gleichzeitig eine Drehsicherung der Montagehilfe an dem Bauteil ausgebildet.

Ein besonders kostengünstiger Aufbau der Nutensteinanordnung ergibt sich, wenn die Stellungsfixierung gleichzeitig als Stellungsanzeige ausgebildet ist.

Besondere Vorteile ergeben sich, wenn die Stellungsanzeige ein Federelement umfasst. Das Federelement kann materialschlüssig mit der Montagehilfe verbunden sein. Der Vorsprung der Montagehilfe, der in das zu befestigende Bauteil bzw. dessen Sichtfenster ragt, dient gleichzeitig als Visualisierungshilfe für die Lage des Nutensteins. Wenn der Nutenstein zur Überführung in die Betriebsstellung verdreht wird, tritt der Nutenstein über die Stellungsanzeige hinweg. Somit gibt der Nutenstein die Stellungsanzeige frei. Der Vorsprung der Montagehilfe, der bisher vom Nutenstein heruntergedrückt wurde, federt weg. Somit ist kein Vorsprung mehr in dem Sichtfenster. Es ist anhand der Stellung des Vorsprungs im zu befestigenden Bauteil zu erkennen, ob der Nutenstein in einer Montagestellung oder in einer Betriebsstellung ist. Nachdem die Stellungsanzeige weggefedert ist, schlägt sie an einer Seite des Nutensteins an. Der Nutenstein kann nicht mehr in seine Montagestellung zurückgedreht werden. Wird der Nutenstein weitergedreht, schlägt er gegen die Nutwandungen. Anschließend kann der Nutenstein gegen den Hintergriff der hinterschnittenen Nut gezogen werden und somit das zu befestigende Bauteil mit dem Profil verspannt werden. Dabei kann vorgesehen sein, dass der Vorsprung der Montagehilfe noch weiter nach unten in die hinterschnittene Nut gezogen wird.

Vorzugsweise ist eine Befestigungsschraube in den Nutenstein eingeschraubt, wobei die Befestigungsschraube zunächst drehfest mit dem Nutenstein verbunden ist. Dies bedeutet, dass die Verschraubung zwischen Nutenstein und Schraube eine Schwergängigkeit aufweist, die größer ist als das Haltemoment der Montagehilfe. Dadurch wird sichergestellt, dass bei einer Verdrehung der Schraube zunächst der Nutenstein über die Verdrehsicherung, z.B. die Rippen der Montagehilfe, hinweg bewegt wird. Erst wenn der Nutenstein in Anlage mit den Nutwandungen ist, kann ein ausreichendes Drehmoment aufgebracht werden, um die Schraube relativ zum Nutenstein zu verdrehen. Dadurch wird dann der Nutenstein gegen die Hinterschneidungen der Nut gezogen. Die drehfeste Anordnung der Schraube an dem Nutenstein kann dadurch realisiert werden, dass ein Schraubensicherungslack verwendet wird, das Gewinde verprägt wird oder ein Gewinde mit Ober- bzw. Untermaß verwendet wird. Weitere Möglichkeiten zur drehfesten Festlegung der Schraube am Nutenstein sind ebenfalls denkbar.

Der Nutenstein kann sich gegenüberliegende Enden mit unterschiedlich gekrümmten stirnseitigen Anlageflächen zur Anlage an einer Nutwand aufweisen. Durch diese Maßnahme ist es möglich, den Nutenstein bei unterschiedlichsten Profilen mit unterschiedlich breiten hinterschnittenen Nuten und unterschiedlich breiten Hinterschneidungen zu verwenden. Es ist bei diesem Nutenstein sichergestellt, dass beide Enden des Nutensteins mit einer Nutwandung in Anlage kommen. Dadurch wird eine sichere Halterung des zu befestigenden Bauteils gewährleistet. Insbesondere kann mit einem solchen Nutenstein eine Grundplatte eines Ecklagerbeschlags zuverlässig an einem Rahmen, der eine hinterschnittene Nut aufweist, festgelegt werden.

Besonders bevorzugt ist es, wenn der Nutenstein bezüglich einer Mittenlängsebene unsymmetrisch ausgebildet ist. Weiterhin ist der Nutenstein vorzugsweise bezüglich eines Drehpunktes unsymmetrisch ausgebildet. Insbesondere kann der Nutenstein bei Profilen eingesetzt werden, die unterschiedliche Nutbreiten in Nutgrund, unterschiedlich breite Nutöffnungen und unterschiedliche Breiten zumindest einer Hinterschneidung aufweisen. Der Drehpunkt des Nutensteins muss nicht mittig in der hinterschnittenen Nut angeordnet sein. Dennoch ist eine Anlage an beiden Nutwandungen sicher gestellt.

Besondere Vorteile ergeben sich, wenn die Anlageflächen unterschiedlich weit von einem Drehpunkt des Nutensteins entfernt angeordnet sind bzw. eine Anlagefläche eine Stelle aufweist, die weiter vom Drehpunkt entfernt ist als alle Punkte der anderen Anlagefläche. Der Drehpunkt ist somit exzentrisch am Nutenstein angeordnet. Im Drehpunkt kann eine Befestigungsschraube des Nutensteins vorgesehen sein.

Gemäß einer Weiterbildung kann vorgesehen sein, dass die weiter vom Drehpunkt entfernte Anlagefläche stärker gekrümmt ist als die gegenüberliegende Anlagefläche. Wenn die vom Drehpunkt weiter entfernte Anlagefläche stärker gekrümmt ist, kann für unterschiedlichste Profilausgestaltungen eine Anlage der Anlagefläche an einer Nutwandung sichergestellt werden. Die weniger weit vom Drehpunkt entfernte Anlagefläche ist weniger stark gekrümmt, da der Abstand des Drehpunkts zu der Nutwandung, die mit der weniger stärker gekrümmten Anlagefläche zusammenwirkt, weniger stark variiert.

Besonders bevorzugt ist es, wenn am Nutenstein zumindest eine Ausnehmung für eine Stellungsfixierung zur Fixierung der Betriebsstellung des Nutensteins vorgesehen ist. Die Stellungsfixierung stellt sicher, dass der Nutenstein nicht in seine Montagestellung zurückgedreht werden kann. Dadurch wird eine zuverlässige Halterung des Bauteils an dem Profil sichergestellt.

Weitere Vorteile ergeben sich, wenn zumindest eine Ausnehmung für eine Stellungsanzeige vorgesehen ist. Durch die Stellungsanzeige kann einem Benutzer angezeigt werden, ob sich der Nutenstein in einer Montagestellung oder in einer Betriebsstellung befindet.

Um von der Drehrichtung des Nutensteins beim Übergang von einer Montagestellung in eine Betriebsstellung unabhängig zu sein, ist es vorteilhaft, wenn der Nutenstein an beiden Enden eine Ausnehmung für eine Stellungsanzeige und/oder Stellungsfixierung aufweist.

Besonders vorteilhaft ist es, wenn der Nutenstein stufenförmig ausgebildet ist. Dadurch kann sichergestellt werden, dass der Nutenstein die Hinterschneidungen der Nut hintergreift.

In den Rahmen der Erfindung fällt außerdem ein Fenster, eine Tür oder dgl. mit einer erfindungsgemäßen Nutensteinanordnung.

Weitere Merkmale und Vorteile der Erfindung ergeben sich aus der nachfolgenden Beschreibung von Ausführungsbeispielen der Erfindung, anhand der Figuren der Zeichnung, die erfindungswesentliche Einzelheiten zeigen, und aus den Ansprüchen. Die einzelnen Merkmale können je einzeln für sich oder zu mehreren in beliebiger Kombination bei einer Variante der Erfindung verwirklicht sein.

Bevorzugte Ausführungsbeispiele der Erfindung sind in der Zeichnung schematisch dargestellt und werden nachfolgend mit Bezug zu den Figuren der Zeichnung näher erläutert. Es zeigen:
- Fig. 1: eine Draufsicht auf ein mittels Nutensteinen zu befestigendes Bauteil;
- Fig. 2: eine vergrößerte perspektivische Ansicht einer ersten Ausführungsform eines Nutensteins;
- Fig. 3: eine Schnittdarstellung durch den Nutenstein der Fig. 2;
- Fig. 4: eine Draufsicht auf das zu befestigende Bauteil mit verdrehten Nutensteinen;
- Fig. 5: eine vergrößerte Ansicht einer alternativen Ausführungsform eines Nutensteins;
- Fig. 6: eine Schnittdarstellung durch den Nutenstein der Fig. 5;
- Fig. 7: eine Draufsicht auf den Nutenstein der Fig. 5 in einer verdrehten Stellung des Nutensteins;
- Fig. 8: eine Darstellung der Montage eines Bauteils mit einem Nutenstein, wobei sich der Nutenstein in einer Montagestellung befindet;
- Fig. 9: eine der Fig. 8 entsprechende Darstellung, wobei der Nutenstein innerhalb der Nut verdreht ist;
- Fig. 10: eine den Fig. 8 und 9 entsprechende Darstellung, wobei der Nutenstein gegen die Hinterschneidungen der Nut gezogen ist.

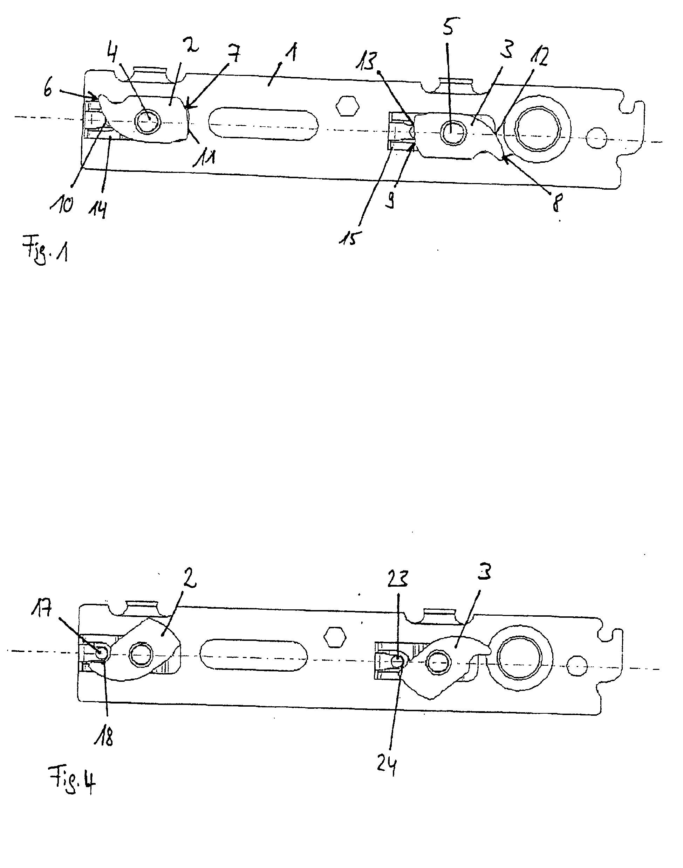

In der Figur 1 ist eine Ansicht von unten eines Bauteils 1 - in diesem Fall einer Grundplatte eines Ecklagerbeschlags - gezeigt, das mittels Nutensteinen 2, 3 an einem Profil mit einer hinterschnittenen Nut befestigt werden soll. Die Nutensteine 2, 3 sind in Längsrichtung des Bauteils 1 ausgerichtet und befinden sich somit in einer Montagestellung. Um in eine Betriebsstellung überführt zu werden, sind die Nutensteine 2, 3 um einen Drehpunkt 4, 5 drehbar. Die Nutensteine 2, 3 weisen jeweils zwei Enden 6, 7 bzw. 8, 9 auf, die gegenüberliegend angeordnet sind und unterschiedlich gekrümmte stirnseitige Anlageflächen 10, 11 bzw. 12, 13 aufweisen. Die Anlageflächen 10, 12 sind weiter vom Drehpunkt 4, 5 entfernt und sind stärker gekrümmt. Unter einer Anlagefläche 10, 12, die weiter vom Drehpunkt 4, 5 entfernt ist, wird hierbei eine Fläche verstanden, die zumindest eine Stelle bzw. Punkt aufweist, die bzw. der weiter vom Drehpunkt 4, 5 entfernt ist als alle Punkte der gegenüber liegenden Anlagefläche 11, 13.

In der gezeigten Montagestellung werden die Nutensteine 2, 3 durch Montagehilfen 14, 15 drehfest gehalten.

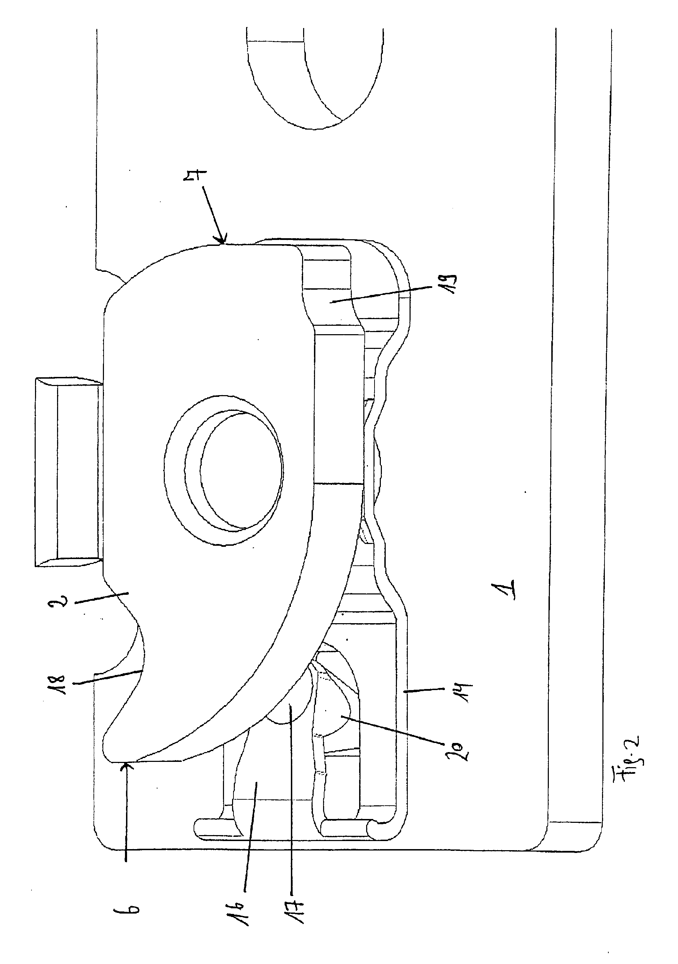

In der Figur 2 ist zu erkennen, dass die Montagehilfe 14 sich einerseits an dem Bauteil 1 und andererseits an dem Nutenstein 2 abstützt. Dadurch wird der stufenförmige Nutenstein 2 von dem Bauteil 1 beabstandet gehalten. Die Montagehilfe 14 ist elastisch ausgestaltet, um eine gewisse Kraft auf den Nutenstein 2 ausüben zu können. Mit der Montagehilfe 14 ist ein Federelement 16 materialschlüssig verbunden. Mit seinem Abschnitt 17 drückt das Federelement 16 gegen den Nutenstein 2 und hält ihn dadurch in seiner Montagestellung. Der Nutenstein 2 weist an beiden Enden 6, 7 Ausnehmungen 18, 19 auf, an denen ein Vorsprung 20 der Montagehilfe 14 zur Anlage kommen kann, wenn der Nutenstein 2 in eine Betriebsstellung verdreht wurde. Der Vorsprung 20 stellt eine Stellungsfixierung dar, da der Nutenstein 2 aufgrund des Zusammenwirkens der Ausnehmungen 18 bzw. 19 mit dem Vorsprung 20 nicht wieder in seine Montagestellung zurückgedreht werden kann, wenn der Vorsprung 20 aufgrund des Federelements 16, mit dem er verbunden ist, ausgefedert ist.

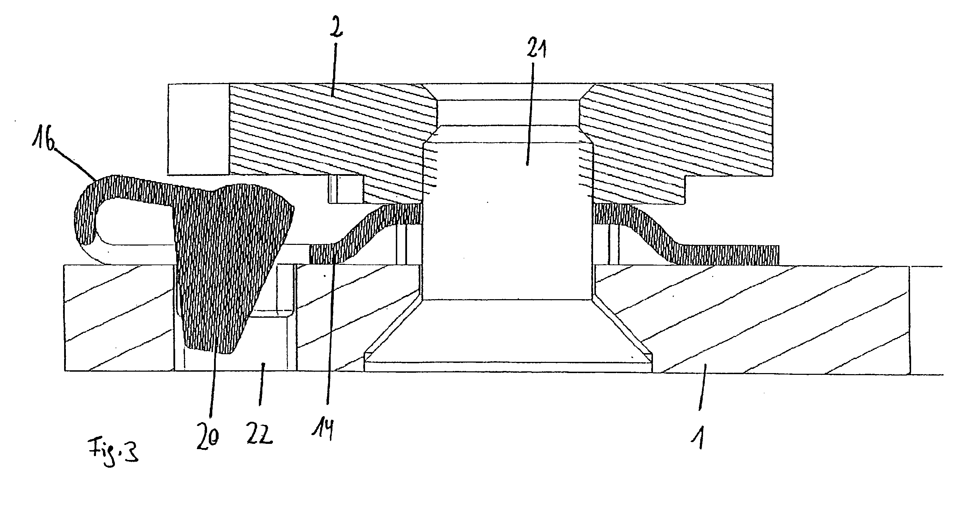

Der Schnittdarstellung der Figur 3 kann man entnehmen, dass der Nutenstein 2 durch die Montagehilfe 14 vom Bauteil 1 beabstandet gehalten wird. Zu erkennen ist auch eine Schraube 21, die teilweise in den Nutenstein 2 eingeschraubt ist. Der Vorsprung 20 durchragt zum einen die Montagehilfe 14 und ragt zum anderen in ein Sichtfenster 22 des Bauteils 1. Somit wird durch den Vorsprung 20 auch die Funktion einer Stellungsanzeige realisiert. Wenn der Vorsprung 20 in das Sichtfenster 22 ragt, wird der Vorsprung 20 durch den Nutenstein 2 in der gezeigten Stellung gehalten. Wird der Nutenstein 2 in eine Betriebsstellung verdreht, so gibt er den Vorsprung 20 frei, so dass dieser sich aufgrund des Federelements 16 aus dem Sichtfenster 22 bewegen kann. Dies bedeutet, dass sich der Nutenstein 2 in einer Betriebsstellung befindet. Gleichzeitig realisiert der Vorsprung 20 dann eine Stellungsfixierung für den Nutenstein 2. Das Federelement 16 kann als Bestandteil der Stellungsanzeige bzw. Stellungsfixierung aufgefasst werden.

In der Figur 4 sind die Nutensteine 2, 3 in einer verdrehten Stellung gezeigt. Die Abschnitte 17, 23 wurden freigegeben, so dass der Vorsprung 20 an der Ausnehmung 18 und ein entsprechender Vorsprung, der gegenüberliegend dem Abschnitt 23 angeordnet ist, an der Ausnehmung 24 des Nutensteins 3 anliegt. Die Nutensteine 2, 3 sind noch nicht in einer vollständigen Betriebsstellung, können jedoch nicht mehr in eine Montagestellung zurückbewegt werden.

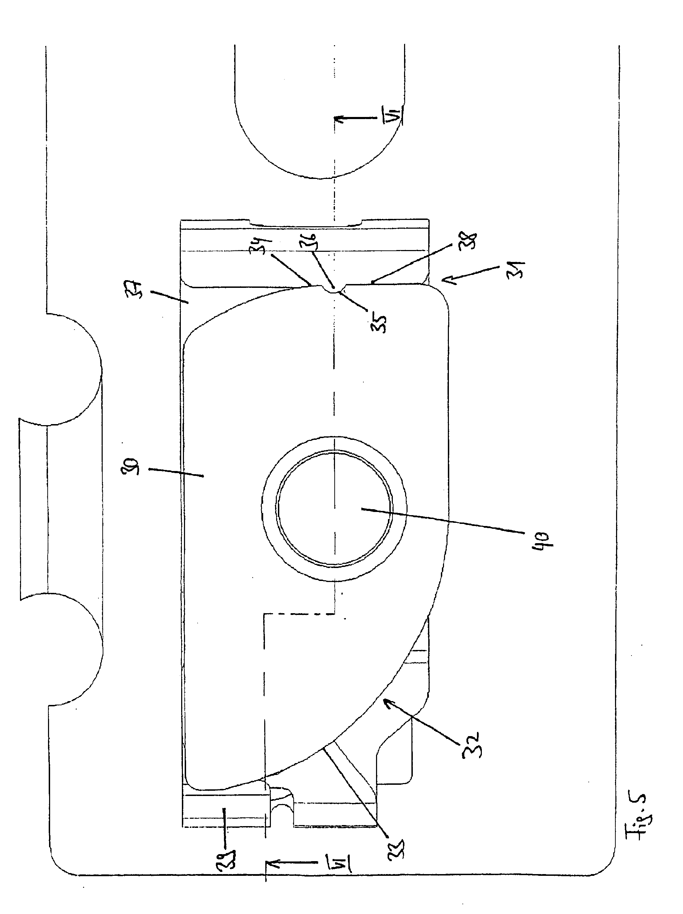

In der Figur 5 ist eine alternative Ausgestaltung eines Nutensteins 30 gezeigt. Auch der Nutenstein 30 weist an seinen gegenüberliegenden Enden 31, 32 unterschiedlich gekrümmte Anlageflächen 33, 34 auf. Die Anlagefläche 34 weist zudem noch eine Ausnehmung 35 auf, in die eine Nase 36 der Montagehilfe 37 eingreift. Die Nase 36 ist an einer Rippe 38 angeordnet. Das Ende 32 wird durch eine Rippe 39 gehalten, so dass der Nutenstein 30 in einer Montagestellung drehfest festgelegt ist. Beim Verdrehen des Nutensteins 30 werden die Rippen 38, 39 ausgelenkt, so dass sich der Nutenstein 30 in eine Betriebsstellung bewegen kann. Der Nutenstein 30 ist bezüglich seines Drehpunktes 40 unsymmetrisch ausgebildet.

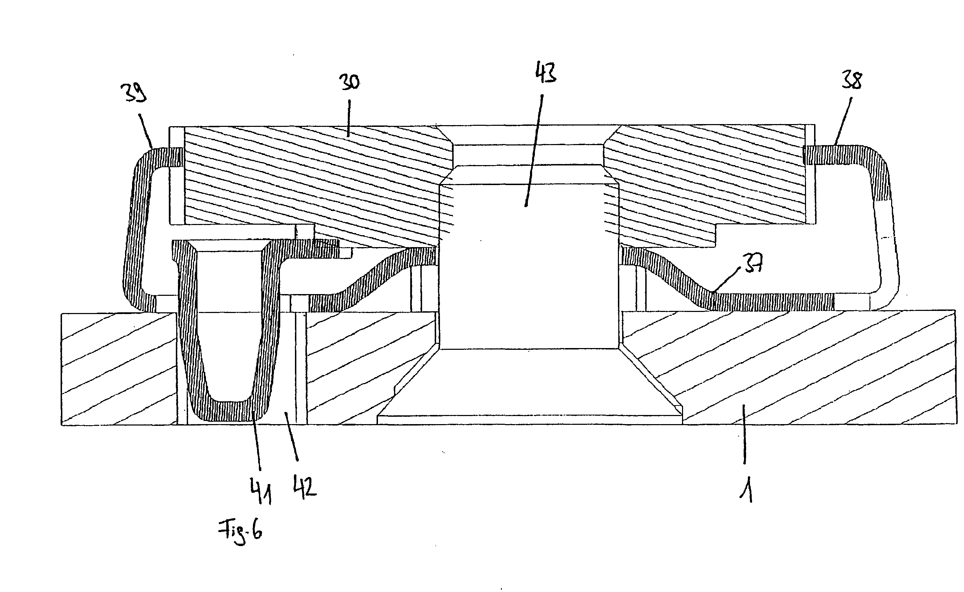

In der Figur 6 ist eine Schnittdarstellung durch die in der Figur 5 gezeigte Anordnung entlang der Linie VI - VI gezeigt. Auch hier ist zu sehen, dass ein Vorsprung 41 von dem Nutenstein 30 in einem Sichtfenster 42 gehalten wird. Die Montagehilfe 37 hält den Nutenstein 30 von dem Bauteil 1 beabstandet. Außerdem ist in dieser Darstellung gut zu erkennen, dass der Nutenstein 30 stufenförmig ausgebildet ist. Der Nutenstein 30 ist über eine Schraube 43 an dem Bauteil 1 gehalten.

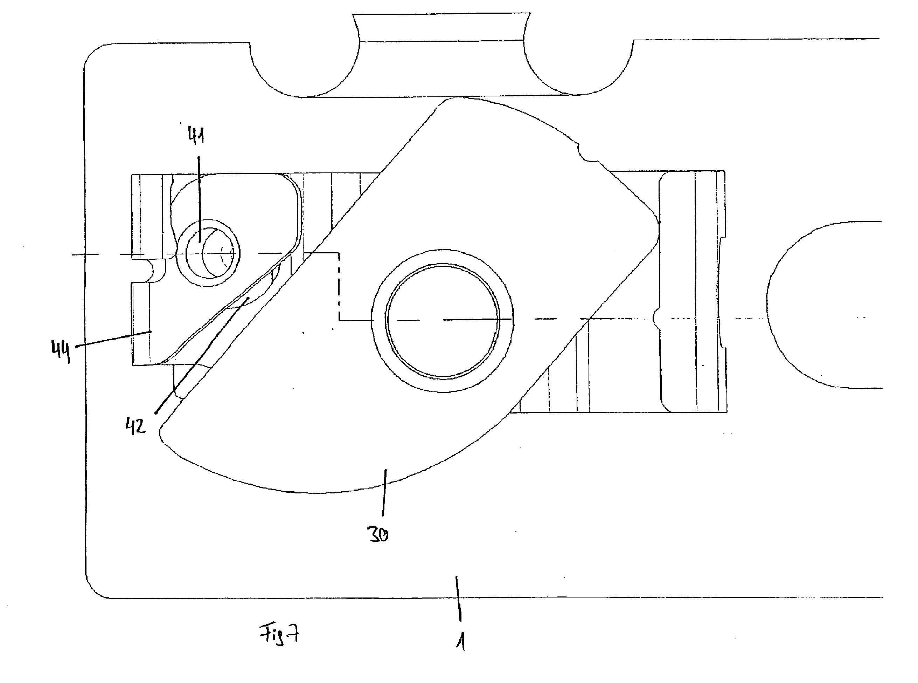

Die Figur 7 zeigt den Nutenstein 30 in einer verdrehten Stellung. Aufgrund des Federelements 44 hat sich der Vorsprung 41 aus dem Sichtfenster 42 bewegt, so dass eine von der Montagestellung abweichende Situation angezeigt wird. Dadurch, dass das Federelement 44 freigegeben wurde, blockiert es nun den Nutenstein 30, sodass dieser nicht wieder zurück in seine Montagestellung überführt werden kann.

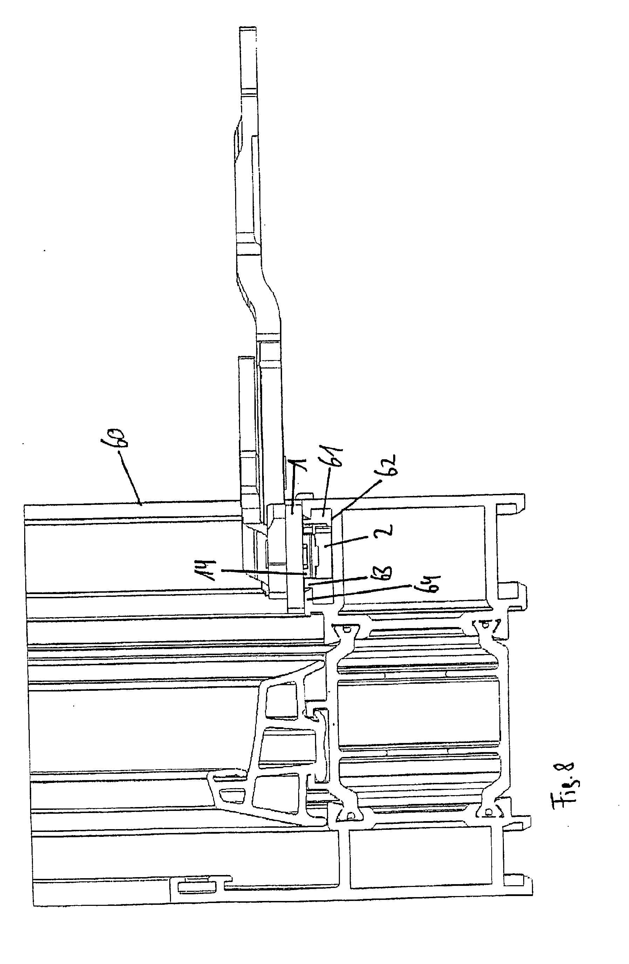

Die Figur 8 zeigt ein Rahmenprofil 60 mit einer hinterschnittenen Nut 61. Je nach Ausführungsform des Rahmenprofils 60 kann die Breite der hinterschnittenen Nut 61 im Nutgrund 62, der Nutöffnung 63 und die Breite der Hinterschneidung 64 variieren. Die in den vorherigen Figuren gezeigten Nutensteine sind geeignet, das Bauteil 1 zu befestigen, auch wenn die genannten Variationen von Profil zu Profil bestehen.

In der Figur 8 befindet sich der Nutenstein 2 in einer Montagestellung. Er kann daher durch die Nutöffnung 63 eingeführt werden. Durch die Montagehilfe 14 wird er dort zum einen drehfest gehalten und zum anderen von dem Bauteil 1 beabstandet gehalten.

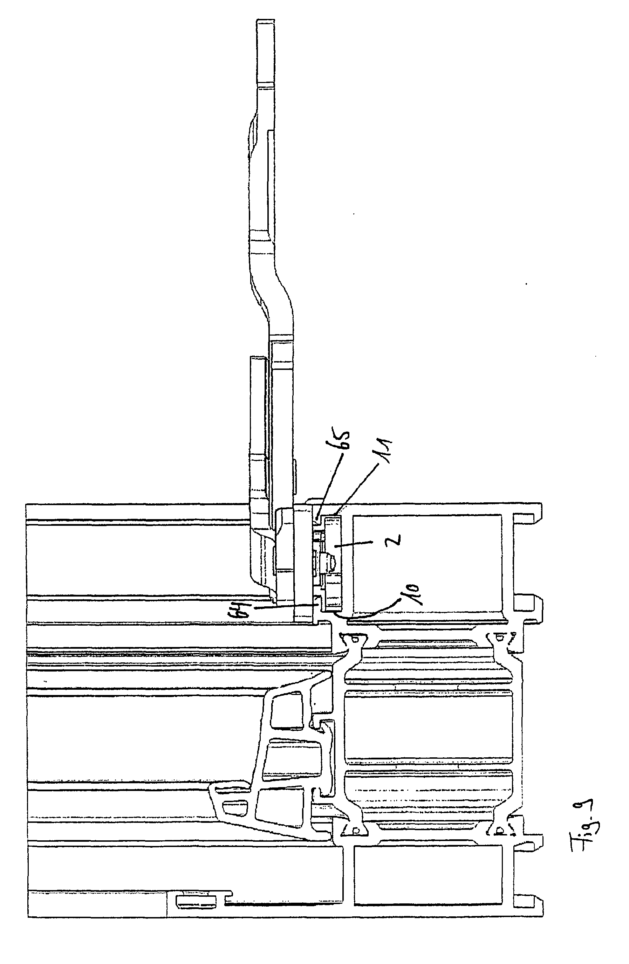

In der Figur 9 wurde der Nutenstein 2 aus seiner Montagestellung heraus verdreht, so dass die Anlageflächen 10, 11 an den Nutwandungen der hinterschnittenen Nut 61 anliegen. Zu erkennen ist, dass der Nutenstein 2 von den Hinterschneidungen 64, 65 beabstandet ist. Bis zur Anlage der Flächen 10, 11 an den Nutwandungen der Nut 61 ist die Schraube 21 drehfest mit dem Nutenstein 2 verbunden. Dadurch kann der Widerstand der Montagehilfe 14, die bestrebt ist, den Nutenstein 2 in seiner Montagestellung zu halten, überwunden werden. Die Schwergängigkeit der Schraube 21 kann durch Einbringen eines Lacks oder dgl. bewirkt werden.

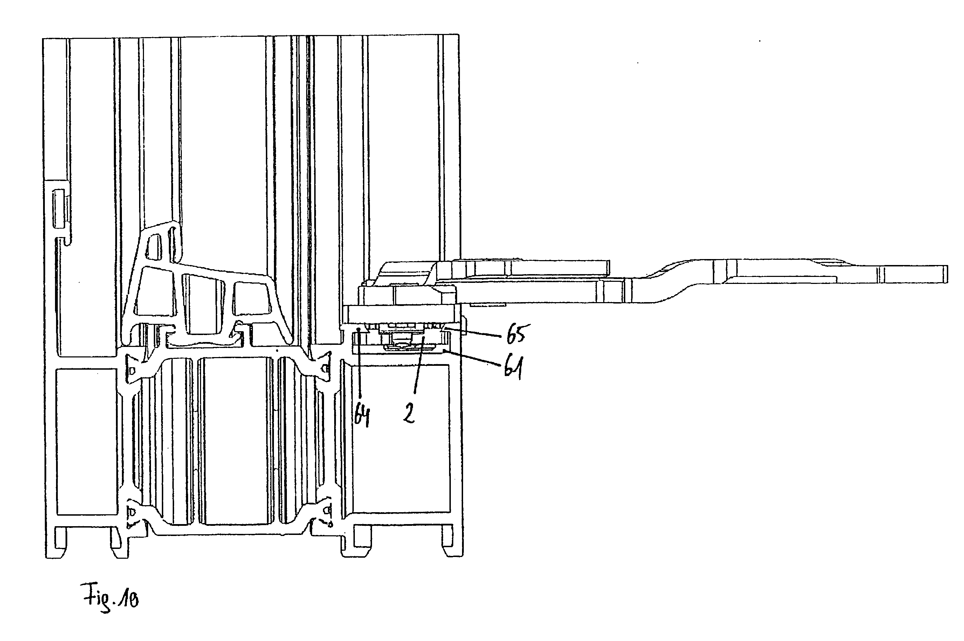

Wird nun ein genügend hohes Drehmoment aufgebracht, so kann die Schraube 21 relativ zum Nutenstein 2 verdreht werden und es stellt sich die in der Figur 10 gezeigte Situation ein, wobei der Nutenstein 2 an den Hinterschneidungen 64, 65 anliegt und das Bauteil 1 an der hinterschnittenen Nut 61 verklemmt. Dies bedeutet, dass die Hinterschneidungen 64, 65 zwischen den Nutenstein 2 und das Bauteil 1 eingeklemmt sind.

## Patentansprüche

1. Nutensteinanordnung mit einem zu befestigenden Bauteil (1) und mit einem Nutenstein zur Befestigung des Bauteils (1) an einer hinterschnittenen Nut (61) eines Fensters, einer Tür oder dgl., wobei eine Montagehilfe (14, 15, 37) vorgesehen ist, die den Nutenstein (2, 3, 30) in einer Montagestellung drehfest hält, **dadurch gekennzeichnet, dass** eine Befestigungsschraube (21, 43) in den Nutenstein (2, 3, 30) eingeschraubt ist und damit drehfest verbunden ist; wobei die Befestigungsschraube (21, 43) bei genügend hohem Drehmoment verdrehbar ist gegenüber dem Nutenstein (2, 3, 30).

2. Nutensteinanordnung nach Anspruch 1, **dadurch gekennzeichnet, dass** die Montagehilfe (14, 15, 37) zumindest teilweise elastisch ausgebildet ist und den Nutenstein (2, 3, 30) von dem zu befestigenden Bauteil (1) beabstandet hält.

3. Nutensteinanordnung nach einem der vorhergehenden Ansprüche, **dadurch gekennzeichnet, dass** die Montagehilfe (37) Rippen (38, 39) aufweist, die in einer Montagestellung abschnittweise seitlich an dem Nutenstein (30) anliegen.

4. Nutensteinanordnung nach einem der vorhergehenden Ansprüche, **dadurch gekennzeichnet, dass** eine Stellungsanzeige und/oder Stellungsfixierung vorgesehen ist.

5. Nutensteinanordnung nach Anspruch 4, **dadurch gekennzeichnet, dass** die Stellungsanzeige und/oder Stellungsfixierung an der Montagehilfe (14, 15, 37) angeordnet ist.

6. Nutensteinanordnung nach Anspruch 4 oder 5, **dadurch gekennzeichnet, dass** die Stellungsfixierung gleichzeitig als Stellungsanzeige ausgebildet ist.

7. Nutensteinanordnung nach einem der vorhergehenden Ansprüche 4 bis 6, **dadurch gekennzeichnet, dass** an dem Bauteil (1) ein Sichtfenster (22, 42) vorgesehen ist, in das ein Teil der Stellungsanzeige bei einer Montagesterlung des Nutensteins (2, 3, 30) ragt.

8. Nutensteinanordnung nach einem der vorhergehenden Ansprüche 4 bis 7, **dadurch gekennzeichnet, dass** die Stellungsanzeige ein Federelement (16, 44) umfasst.

9. Nutensteinanordnung nach einem der vorhergehenden Ansprüche, **dadurch gekennzeichnet, dass** der Nutenstein (2, 3, 30), zwei sich gegenüber liegende Enden (6, 7; 8, 9; 31, 32) aufweist, wobei die gegenüber liegenden Enden (6, 7; 8, 9; 31, 32) unterschiedlich gekrümmte stirnseitige Anlageflächen (10, 11; 12, 13; 33, 34) zur Anlage an einer Nutwand aufweisen.

10. Nutensteinanordnung nach Anspruch 9, **dadurch gekennzeichnet, dass** die Anlageflächen (10, 11; 12, 13; 33, 34) unterschiedlich weit von einem Drehpunkt (4, 5, 40) des Nutensteins (2, 3, 30) entfernt angeordnet sind.

11. Nutensteinanordnung nach einem der vorhergehenden Ansprüche, **dadurch gekennzeichnet, dass** der Nutenstein (2, 3, 30) bezüglich einer Mittenlängsebene und/oder einem Drehpunkt unsymmetrisch ausgebildet ist.

12. Nutensteinanordnung nach einem der vorhergehenden Ansprüche, **dadurch gekennzeichnet, dass** am Nutenstein (2, 3) zumindest eine Ausnehmung (18, 19, 24) für die Stellungsfixierung zur Fixierung der Betriebsstellung des Nutensteins (2, 3) vorgesehen ist.

13. Nutensteinanordnung nach einem der vorhergehenden Ansprüche, **dadurch gekennzeichnet, dass** am Nutenstein (2, 3) zumindest eine Ausnehmung (18, 19, 24) für eine Stellungsanzeige vorgesehen ist.

14. Fenster, Tür oder dgl. mit einer Nutensteinanordnung nach einem der vorhergehenden Ansprüche.

## Claims

1. A sliding block assembly comprising a component (1) to be fastened and a sliding block for fastening the component (1) to an undercut groove (61) of a window, a door or similar, wherein an assembly aid (14, 15, 37) is provided, which holds the sliding block (2, 3, 30) in an assembly position in a torque-proof manner, **characterised in that** a fixing screw (21, 43) is screwed into the sliding block (2, 3, 30) and is connected thereto in a torque-proof manner, wherein if the torque is sufficiently high the fixing screw (21, 43) can be turned with respect to the sliding block (2, 3, 30).

2. A sliding block assembly according to claim 1, **characterised in that** he assembly aid (14, 15, 37) is at least partially of resilient design and holds the sliding block (2, 3, 30) spaced apart from the component (1) to be fastened.

3. A sliding block assembly according to one of the preceding claims, **characterised in that** the assembly aid (37) comprises ribs (38, 39), sections of which in an assembly position laterally abut the sliding block (30).

4. A sliding block assembly according to any one of the preceding claims, **characterised in that** a position indicator and/or position fixing means are/is provided.

5. A sliding block assembly according to claim 4, **characterised in that** the position indicator and/or position fixing means are/is arranged on the assembly aid (14, 15, 37).

6. A sliding block assembly according to claim 4 or 5, **characterised in that** the position fixing means is simultaneously designed as a position indicator.

7. A sliding block assembly according to any one of the preceding claims 4 to 6, **characterised in that** on the component (1) there is provided a viewing window (22, 24) into which a part of the position indicator projects in an assembly position of the sliding block (2, 3, 30).

8. A sliding block assembly according to any one of the preceding claims 4 to 7, **characterised in that** the position indicator comprises a spring element (16, 44).

9. A sliding block assembly according to any one of the preceding claims, **characterised in that** the sliding block (2, 3, 30) has two opposite ends (6, 7; 8, 9; 31, 32), wherein the opposite ends (6, 7; 8, 9; 31, 32) have end contact surfaces (10, 11; 12, 13; 31, 32) of different curvature for abutment against a groove wall.

10. A sliding block assembly according to claim 9, **characterised in that** the contact surfaces (10, 11; 12, 13; 33, 34) are arranged at a different distances from a centre of rotation (4, 5, 40) of the sliding block (2, 3, 30).

11. A sliding block assembly according to any one of the preceding claims, **characterised in that** the sliding block (2, 3, 30) is of asymmetrical design with respect to a longitudinal centre plane and/or a centre of rotation.

12. A sliding block assembly according to any one of the preceding claims, **characterised in that** at least one recess (18, 19, 24) for the positioning fixing means for fixing the operational position of the sliding block (2, 3) is provided on the sliding block (2, 3).

13. A sliding block assembly according to any one of the preceding claims, **characterised in that** at least one recess (18, 19, 24) for a position indicator is provided on the sliding block (2, 3).

14. Window, door or similar having a sliding block assembly according to any one of the preceding claims.

## Revendications

1. Agencement de coulisseau, avec une pièce (1) à fixer et avec un coulisseau pour fixer la pièce (1) sur une rainure contre-dépouillée (61) d'une fenêtre, d'une porte ou analogue, sachant qu'il est prévu une aide au montage (14, 15, 37) qui maintient le coulisseau (2, 3, 30) bloqué en rotation dans une position de montage, **caractérisé en ce qu'**une vis de fixation (21, 43) est vissée dans le coulisseau (2, 3, 30) et lui est liée en rotation, sachant que la vis de fixation (21, 43) est rotative par rapport au coulisseau (2, 3, 30) en présence d'un couple de rotation suffisamment élevé.

2. Agencement de coulisseau selon la revendication 1, **caractérisé en ce que** l'aide au montage (14, 15, 37) est réalisée au moins partiellement élastique et maintient le coulisseau (2, 3, 30) à distance de la pièce (1) à fixer.

3. Agencement de coulisseau selon l'une des revendications précédentes, **caractérisé en ce que** l'aide au montage (37) présente des nervures (38, 39) qui, dans une position de montage, s'appliquent par places latéralement contre le coulisseau (30).

4. Agencement de coulisseau selon l'une des revendications précédentes, **caractérisé en ce qu'**il est prévu un affichage de position et/ou une fixation en position.

5. Agencement de coulisseau selon la revendication 4, **caractérisé en ce que** l'affichage de position et/ou la fixation en position est disposé(e) sur l'aide au montage (14, 15, 37).

6. Agencement de coulisseau selon la revendication 4 ou 5, **caractérisé en ce que** la fixation en position est simultanément conçue comme affichage de position.

7. Agencement de coulisseau selon l'une des revendications précédentes 4 à 6, **caractérisé en ce qu'**il est prévu sur la pièce (1) un regard (22, 42) dans lequel dépasse une partie de l'affichage de position dans une position de montage du coulisseau (2, 3, 30).

8. Agencement de coulisseau selon l'une des revendications précédentes 4 à 7, **caractérisé en ce que** l'affichage de position comprend un élément de ressort (16, 44).

9. Agencement de coulisseau selon l'une des revendications précédentes, **caractérisé en ce que** le coulisseau (2, 3, 30) présente deux extrémités en vis-à-vis (6, 7 ; 8, 9 ; 31, 32), sachant que les extrémités en vis-à-vis (6, 7 ; 8, 9 ; 31, 32) présentent des faces d'application frontales (10, 11 ; 12, 13 ; 33, 34) de courbures différentes pour l'application contre une paroi de rainure.

10. Agencement de coulisseau selon la revendication 9, **caractérisé en ce que** les faces d'application (10, 11 ; 12, 13 ; 33, 34) sont disposées à des distances différentes d'un centre de rotation (4, 5, 40) du coulisseau (2, 3, 30).

11. Agencement de coulisseau selon l'une des revendications précédentes, **caractérisé en ce que** le coulisseau (2, 3, 30) est réalisé asymétrique par rapport à un plan médian longitudinal et/ou à un centre de rotation.

12. Agencement de coulisseau selon l'une des revendications précédentes, **caractérisé en ce qu'**il est prévu sur le coulisseau (2, 3) au moins un évidement (18, 19, 24) pour la fixation en position afin de fixer la position de fonctionnement du coulisseau (2, 3).

13. Agencement de coulisseau selon l'une des revendications précédentes, **caractérisé en ce qu'**il est prévu sur le coulisseau (2, 3) au moins un évidement (18, 19, 24) pour un affichage de position.

14. Fenêtre, porte ou analogue avec un agencement de coulisseau selon l'une des revendications précédentes.
